# EUROPEAN PATENT SPECIFICATION

(11) **EP 0 713 878 B1**
(45) Date of publication and mention of the grant of the patent: **16.02.2000**
(21) Application number: 95118307.8
(22) Date of filing: 21.11.1995
(51) Int. Cl.: C07F 7/08

(54) **A method of manufacturing a trans silacyclohexane compound**
Verfahren zur Herstellung einer trans-Silacyclohexanverbindung
Procédé pour la préparation d'un composé trans-silacyclohéxane

(30) Priority: 22.11.1994 JP 31242794
(43) Date of publication of application: 29.05.1996
(73) Proprietor: Shin-Etsu Chemical Co., Ltd., Chiyoda-ku Tokyo 100 (JP)
(72) Inventor: Ogihara, Tsutomu, c/o Specialty Chemicals Res. Ctr, Kubiki-Mura, NakaKubiki-Gun, Niigata-ken (JP); Shimizu, Takaaki, c/o Specialty Chemicals Res. Ctr, Kubiki-Mura, NakaKubiki-Gun, Niigata-ken (JP); Kinsho, Takeshi, c/o Specialty Chemicals Res. Ctr., Kubiki-Mura, NakaKubiki-Gun, Niigata-ken (JP); Kaneko, Tatsushi, c/o Specialty Chemicals Res. Ctr, Kubiki-Mura, NakaKubiki-Gun, Niigata-ken (JP)
(74) Representative: TER MEER STEINMEISTER & PARTNER GbR

(56) References cited:
- EP-A- 0 630 903
- Patai et al."The chemistry of organosilicon compounds", Chapter 4 (page 307 and 314), John Wiley & Sons, 1989

## Description

### Related Application

This application claims the priority of Japanese Patent application No. 6-312427 filed on November 22, 1994, which is incorporeted herein by reference.

### Background of the Invention

### 1. Field of the Invention

This invention relates to a method of manufacturing a trans silacyclohexane compound used for a liquid crystal substance of a liquid crystal display element.

### 2. The prior Art

A liquid crystal display element utilizes the optical anisotropy and dielectric anisotropy of liquid crystal substances. Display modes include the TN mode (twisted nematic mode), the STN mode (super twisted nematic mode), the SBE mode (super birefringence mode), the DS mode (dynamic scattering mode), the guest-host mode, the DAP mode ("deformation of aligned phase" mode), the PD mode (polymer dispersion mode) and the OMI mode (optical mode interference mode). The most common display device has a twisted nematic structure based on the Schadt-Helfrich mode.

The properties required of the liquid crystal substance used in these liquid crystal displays are somewhat different depending on the display method. However, a wide liquid crystal temperature range and stability with regard to moisture, air, light, heat, electric fields, etc., are properties commonly required by all display methods. Furthermore, it is desirable for the liquid crystal material to have a low viscosity, and also to have a short address time, low threshold voltage and high contrast in the cell(s).

In recent years, along with the expansion of the applications of liquid crystal displays, the characteristics required of liquid crystal materials are becoming more and more advanced and demanding. In particular, superior characteristics such as improved low temperature performance, a wider temperature range for automobile onboard use and a lower driving voltage, compared with conventional liquid crystal substances, are desired.

Currently, there is no single compound which satisfies all of these requirements. In practice, liquid crystal mixtures are used which are obtained by mixing several to more than ten liquid crystal compounds and latent liquid crystal compounds. Because of this, a large number of different types of compounds have to be synthesized.

In the conventionally known manufacturing processes of hydrocarbon-type liquid crystal compounds, not only the trans isomer which exhibits liquid crystal characteristics but also the non-liquid crystal cis isomer is produced as a side product, and therefore purification and separation by means of recrystallization and such have been conducted to obtain only the trans isomer. Currently there is no technology established which can isomerize the cis isomer into the trans isomer, and therefore current technology cannot isomerize the cis isomer into the trans isomer in an economically feasible way. Because of this, the cis isomer is treated as an unwanted product, resulting in significant waste in the manufacturing process and this is a very uneconomical practice.

Bearing this problem in mind, the inventors developed new liquid crystal compounds which contained a silicon atom(s) in the molecule for the purpose of improving the characteristics of liquid crystal substances, and filed a patent application(s) for them. Steric isomerization from the cis isomer to the trans isomer, which has been very difficult, is made easy by using these new liquid crystal compounds.

### Brief Summary of the Invention

The object of the invention is to provide a method of manufacturing the liquid crystal trans isomer by means of steric isomerization of the cis isomer which is a non-liquid crystal compound generated as a side product of the manufacturing of these new liquid crystal compounds.

The present invention provides a method of manufacturing a trans silacyclohexane compound, comprising: reacting a compound represented by the general formula: 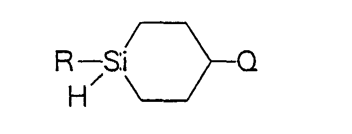 with an alcohol represented by the general formula

R'OH

in the presence of a transition metal catalyst to convert it to an alkoxy silacyclohexane represented by the general formula 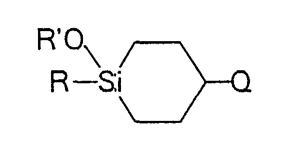 and then reducing the product to obtain a silacyclohexane compound represented by the general formula 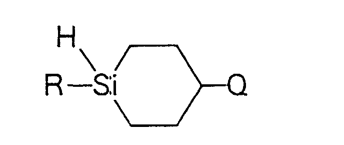 which has a reversed configuration with regard to the silacyclohexane ring compared with the starting substance;
wherein R denotes a linear-chain alkyl group having 1-10 carbons, a branched-chain alkyl group having 3-8 carbons, an alkoxyalkyl group having 2 -7 carbons, or an alkenyl group having 2-8 carbons, and Q denotes a group represented by the general formula: 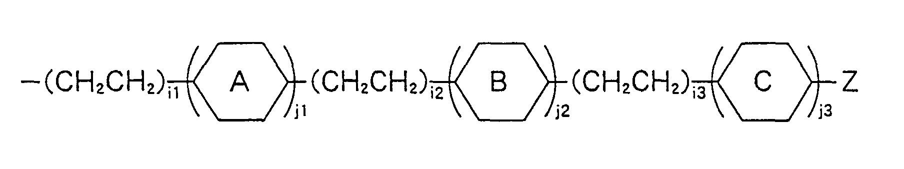 the groups 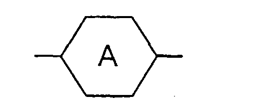 and 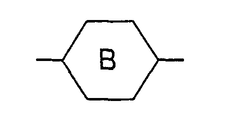 independently denote 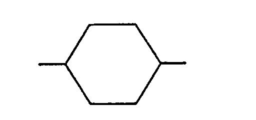 or 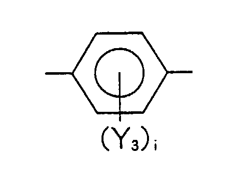
wherein Y₃ denotes F or a methyl group and i denotes 0, 1 or 2;
   the group 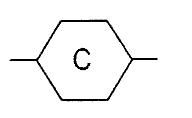 denotes 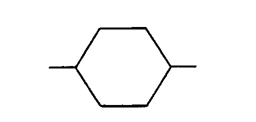 or 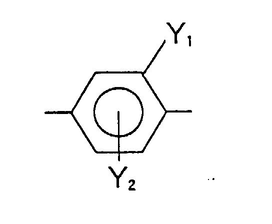
wherein Y₁ and Y₂ independently denote H, F or Cl;
Z denotes a CN, F, Cl, CF₃, CF₂Cl, OCF₃, OCHF₂, OCF₂Cl, OCHFCl, (O)_{ℓ}CY₄=CX₃X₄ ℓ denotes 0 or 1; Y₄, X₃ and X₄ independently denote H, F or Cl., O(CH₂)ᵣ(CF₂)ₛX₅ r and s independently denote 0, 1 or 2 where r+s=2 , 3 or 4; X₅ denotes H, F or Cl., R or OR group;
each of i1, i2 and i3 denotes 0 or 1 where i1 + i2 + i3 = 1 ;
each of j1, j2 and j3 denotes 0, 1 or 2 where j1 + j2 + j3 = 0 , 1 or 2; and
R' denotes a linear-chain alkyl group having 1-10 carbons or a branched-chain alkyl group having 3-8 carbons.

### Detailed Description

The present invention is further described in details below.

It is known that a reaction between an optically active non-cyclic silicon compound and halogen generally involves equilibration of the configuration on the silicon atom (refer to Chapter 4 of The Chemistry of Organic Silicon Compounds Part 1, Saul Patai and Zvi Rappoport; John Wiley & Sons (1989)). 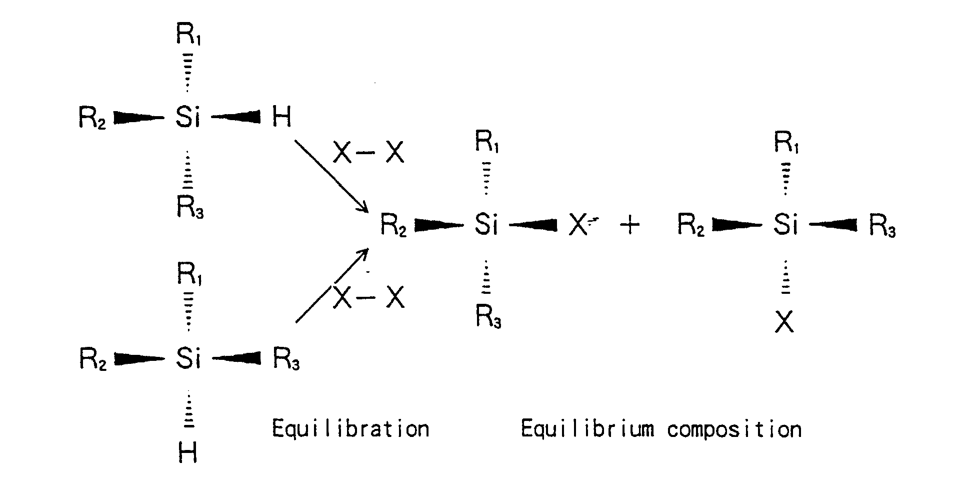 (X denotes a halogen.)

As a result, regardless of the configuration of the raw material, an optically active silicon compound, stereoisomers of the halogenated silicon compound are produced in the same ratios.

Similarly, the reaction between halogen and the hydrosilacyclohexane compound in the patent applications the inventors have filed involves equilibration of the configuration of the alkyl group on the silicon atom and therefore stereoisomers of halosilacyclohexane compound are produced in the same ratios regardless of the configuration of the raw material, the silacyclohexane compound.

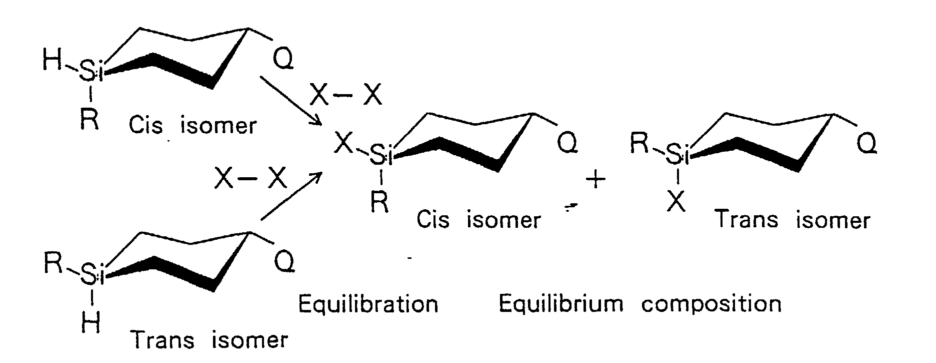

For example, when a cis-silacyclohexane compound which does not exhibit liquid crystal characteristics is reacted with a halogen, trans isomers and cis isomers are produced due to equilibration. These halosilacyclohexane compounds are reduced, with a stereo-reversed configuration, by the reducing agent described later. Therefore, the liquid crystal trans -silacyclohexane compound, the target product, is obtained as a mixture with the cis isomer, resulting in a reduced yield.

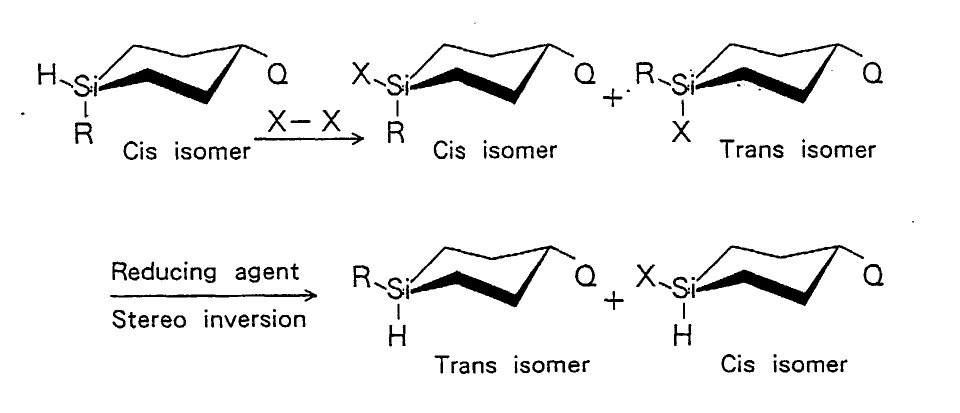

On the other hand, it is known that a reaction between an optically active non-cyclic silicon compound and alcohol involves stereo inversion on the silicon atom (refer to Chapter 4 of The Chemistry of Organic Silicon Compounds Part 1, Saul Patai and Zvi Rappoport; John Wiley & Sons (1989)).

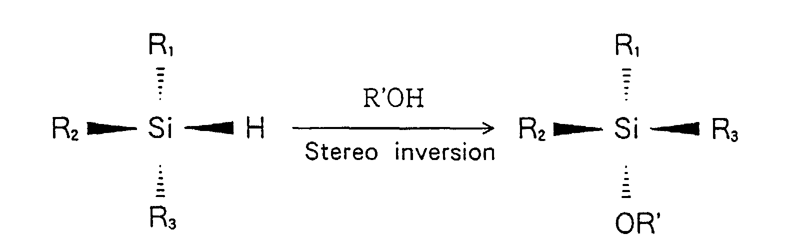

However, for the hydrosilacyclohexane liquid crystal compound in the patent applications the inventors have filed, there has been no report on configuration control using a reaction with alcohol. After an earnest investigation, the inventors discovered that an alkoxy silacyclohexane compound with a selectively reversed configuration could be manufactured by reacting the hydrosilacyclohexane liquid crystal compound with alcohol in the presence of a transition metal catalyst.

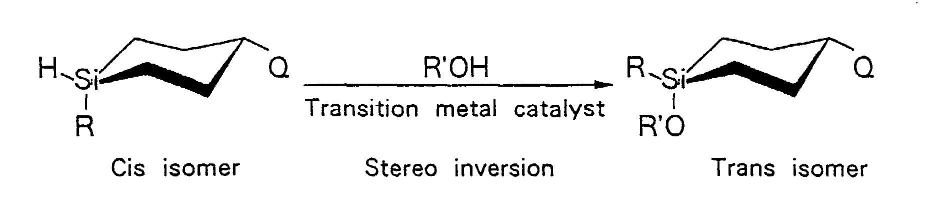

Using as a starting substance a cis-silacyclohexane compound which is completely useless because of the lack of liquid crystal characteristics, this reaction can be utilized to obtain a trans-alkoxy silacyclohexane compound which is a precursor of a trans-silacyclohexane compound which is highly useful because of its superior liquid crystal characteristics.

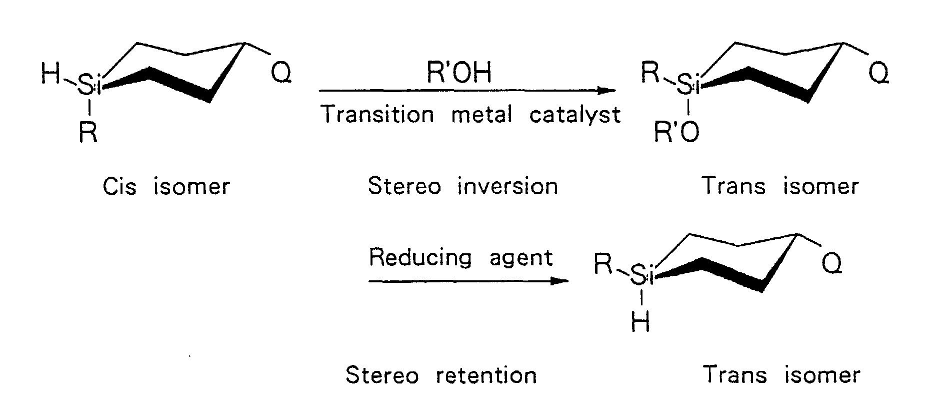

For the transition metal catalyst used in this reaction, palladium, platinum, rhodium, iridium, nickel, copper, etc. are preferable. Although these metals can be used as a single substance, it is more preferable to use activated carbon, alumina, silica, barium sulfate, etc. as a carrier because then the catalyst activity will be higher. Transition metal complex catalysts such as RhCl[P(C₆H₅)₃]₃ and Pd[P(C₆H₅)₃]₄ are preferably used as well. The amount of the transition metal catalysts used may be 0.1 -10 wt% to the amount of a cis-silacyclohexane compound.

For the alcohol, a linear-chain alkyl alcohol having 1-10 carbons or a branched-chain alkyl alcohol having 3-8 carbons is preferable. Particularly preferable are lower alcohols such as methyl alcohol, ethyl alcohol, n-propyl alcohol, iso-propyl alcohol and n-butyl alcohol. The alcohols can be used as solvent, and the amount of the alcohols may be 1-100 mol% to the amount of a silasiclohexane compound.

The stereo inversion from the cis isomer to the trans isomer may be carried out at temperatures from a room temperature to a reflux temperature of a solvent.

Alkoxy silane is generally known to be reduced with the configuration preserved (refer to Chapter 4 of The Chemistry of Organic Silicon Compounds Part 1, Saul Patai and Zvi Rappoport; John Wiley & Sons (1989)).

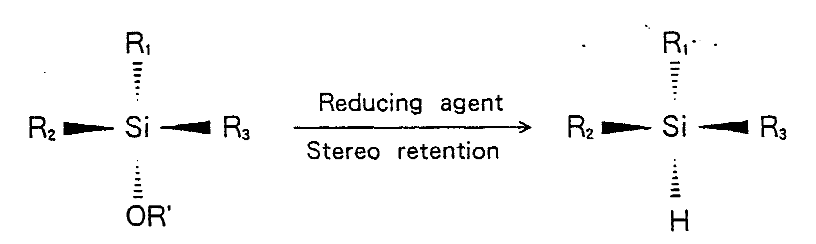

Therefore, when the alkoxy silacyclohexane compound obtained using the method described above is reduced by the reducing agent described later, the reduction proceeds with the configuration preserved and the trans isomer, the target product, can be obtained with a high yield.

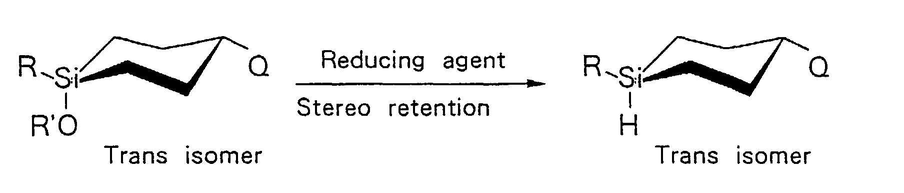

Examples of the reagent used to reduce the obtained alkoxy silacyclohexane compound include metal hydrides such as sodium hydride, calcium hydride, trialkylsilanes, boranes and dialkyl aluminum, complex hydrides such as lithium aluminum hydride, sodium borohydride, lithium borohydride, potassium borohydride and tributylammonium borohydride, as well as substitution -type hydride compounds derived from them such as lithium trialkoxy aluminum hydride, sodium di (methoxyethoxy) aluminum hydride, lithium triethyl borohydride and sodium cyano borohydride. The amount of the reagent used may be 1-20 equivalent to the alkoxy silacyclohexane compound. The reduction of the alkoxy silacyclohexane may be carried out preferably at -50 to 100 °C, and more preferably at -20 to 70 °C. The reduction may be carried out using solvents such as aromatic hydrocarbons such as benzene, toluene or xylen, or ether such as tetrahydrofuran or diethylether.

The compound manufactured with the method of the present invention as described thus far can be purified with a conventional method such as recrystallization and chromatography until its purity reaches the level required for practical use to obtain the target product, the trans isomer of a silacyclohexane-type liquid crystal compound.

### Examples

The details of this invention are described below by referring to specific examples.

### [Preparation example 1]

### Preparation of 4-(trans-4-(2-(3,4-difluorophenyl) ethyl) cyclohexyl)-1-n-pentyl-1-silacyclohexane

12.0 g of potassium t-butoxide was added to a mixture of 47.0 g of 3,4-difluorobenzyltriphenylphosphonium bromide and 200 ml of tetrahydrofuran (hereafter abbreviated as "THF") to prepare an orange-colored ylide solution. To this solution, a THF 50 ml solution of 35.0 g of 4-(4-n-pentyl-4-phenyl-4-silacyclohexyl) cyclohexane carbaldehyde was added. After a 2-hour stirring at room temperature, the mixture was poured into ice water, and extraction was conducted using ethyl acetate. n-hexane was added to the residue obtained after conventional washing by brine, drying and concentrating processes, crystals of triphenylphosphine oxide generated were filtered out and the filtrate was concentrated. The residue was purified by means of silica gel chromatography to obtain 41.7 g of 4-(trans-4-(2-(3,4-difluorophenyl) ethenyl) cyclohexyl) -1-n-pentyl-1-phenyl-1-silacyclohexane.

IR (liquid film) ν max: 2920, 2855, 1595, 1515, 1425, 1290, 1110, 960 and 800 cm⁻¹

40 g of 4-(trans-4-(2-(3,4-difluorophenyl) ethenyl) cyclohexyl)-1-n-pentyl-1-phenyl-1-silacyclohexane thus obtained was dissolved in 200 ml of ethyl acetate and hydrogenation was conducted at 0.1 MPa with 200 mg of platinum oxide as a catalyst. After the theoretical amount of hydrogen was consumed, the catalyst was filtered out and the filtrate was concentrated to obtain 40.2 g of 4-(trans-4-(2-(3,4-difluorophenyl) ethyl) cyclohexyl)-1-n-pentyl-1-phenyl-1-silacyclohexane.

IR (liquid film) ν max: 2920, 2855, 1605, 1518, 1280, 1110, 853 and 810 cm⁻¹

100 ml of a dichloromethane solution of 1.0 mol/liter iodine monochloride was added to 40 g of this 4-(trans-4-(2-(3,4-difluorophenyl) ethyl) cyclohexyl)-1-n-pentyl-1-phenyl-1-silacyclohexane at room temperature and stirring was conducted for 1 hour. A mixture of 4.0 g of methanol and 11.0 g of triethylamine was added to this solution at room temperature and refluxing and stirring were conducted for 1 hour. The reaction mixture was concentrated, and 200 ml of hexane was added to it to precipitate the side product, triethylamine chloride, which was then filtered out. The filtrate was concentrated to obtain 34.6 g of 4-(trans-4-(2-(3,4-difluorophenyl) ethyl) cyclohexyl)-1-n-pentyl-1-methoxy-1-silacyclohexane.

This was dissolved into 100 ml of THF and this solution was then added to a 100 ml THF solution of 10.0 g lithium aluminum hydride. After 1 hour of refluxing and stirring, the reaction mixture was poured into 200 ml of 5% hydrochloric acid and extraction was conducted using ethyl acetate. After conventional washing, drying and concentrating processes, purification was conducted by means of silica gel chromatography to obtain 28.9 g (yield 86.3%) of the trans isomer. This substance exhibited nematic liquid crystal characteristics in the temperature range of 7.6-69.7°C, indicating that it was very useful as a liquid crystal substance. On the other hand, 3.6 g (yield 10.9%) of the cis isomer was obtained. This substance did not crystallize even when cooled down to -60°C, indicating that it was useless as it was. Trans isomer:
IR (liquid film) ν max: 2920, 2852, 2098, 1520, 1286, 1211, 1119, 887 and 816 cm⁻¹

### [Example 1]

### Preparation of trans 4-(trans-4-(2-(3,4-difluorophenyl) ethyl) cyclohexyl)-1-n-pentyl-1-silacyclohexane

3.5 g of cis-4-(trans-4-(2-(3,4-difluorophenyl) ethyl) cyclohexyl)-1-n-pentyl-1-silacyclohexane obtained in [Preparation example 1] was dissolved in 30 ml of methanol. 0.2 g of palladium-carbon catalyst was then added to this and stirring was conducted at room temperature for 15 minutes. After filtering out the catalyst, the filtrate was concentrated to obtain 4-(trans-4-(2-(3,4-difluorophenyl) ethyl) cyclohexyl)-1-methoxy-1-n-pentyl-1-silacyclohexane. This was dissolved in 10 ml of THF and the solution was added to a 50 ml THF solution of 5.0 g lithium aluminum hydride, followed by 1 hour of refluxing. The reaction mixture was poured into 200 ml of 5% hydrochloric acid and extraction was conducted using ethyl acetate. After conventional washing by brine, drying and concentrating processes, purification was conducted by means of silica gel chromatography to obtain 3.4 g (yield 97%) of the target product.

### [Preparation example 2]

### Preparation of 4-(trans-4-(3,4-difluorophenyl) cyclohexyl)-1-n-pentyl-1-silacyclohexane

19.3 g of 3,4-difluorobromobenzene was dripped into a mixture of 2.55 g of magnesium and 50 ml of THF and 3 hours of refluxing was conducted to obtain a Grignard's reagent. A 50 ml THF solution of 34.0 g of 4-(4-n-pentyl-4-phenyl-4-silacyclohexyl) cyclohexanone was then added to this. After 2 hours of refluxing, the reaction mixture was cooled down to room temperature and poured into an ammonium chloride solution, followed by extraction using benzene. 1 g of p-toluenesulfonic acid was added to this benzene solution and, while refluxing was conducted, water generated was separated and removed. When distillation of water stopped, the temperature was lowered to room temperature. The reaction mixture was then poured into a sodium bicarbonate solution. After conventional washing by brine, drying and concentrating processes, the residue was purified by means of silica gel chromatography to obtain 38.0 g of 4-(4-(3,4-difluorophenyl)-3-cyclohexenyl) -1-n-pentyl-1-phenyl -1-silacyclohexane. This was dissolved in 200 ml of ethyl acetate and hydrogenation was conducted at 0.5 MPa with 200 mg of palladium-carbon as a catalyst. After the theoretical amount of hydrogen was consumed, the catalyst was filtered out and the filtrate was concentrated to obtain 38.2 g of 4-(trans-4-(3,4-difluorophenyl)cyclohexyl)-1-n-pentyl -1-phenyl-1-silacyclohexane.

IR (liquid film) ν max: 2920, 2855, 1603, 1517, 1422, 1274, 1110, 868 and 812 cm⁻¹

100 ml of a dichloromethane solution of 1.0 mol/liter iodine monochloride was added to 38.0 g of 4-(trans-4-(3,4-difluorophenyl) cyclohexyl) -1-n-pentyl-1-phenyl-1-silacyclohexane at room temperature and stirring was conducted for 1 hour. A mixture of 5.0 g of methanol and 6.0 g of urea was then added to this solution at room temperature and refluxing and stirring were conducted for 1 hour. The reaction mixture was concentrated, and 200 ml of hexane was added to it to precipitate the side product, urea chloride, which was then filtered out. The filtrate was concentrated to obtain 33.8 g of 4-(trans-4-(3, 4-difluorophenyl) cyclohexyl)-1-n-pentyl-1-ethoxy -1-silacyclohexane.

This was dissolved into 100 ml of THF and this solution was then added to a 100 ml THF solution of 10.0 g lithium aluminum hydride. After 1 hour of refluxing and stirring, the reaction mixture was poured into 200 ml of 5% hydrochloric acid and extraction was conducted using ethyl acetate. After conventional washing by brine, drying and concentrating processes, purification was conducted by means of silica gel chromatography to obtain 25.2 g (yield 80.2%) of the target product. This substance exhibited nematic liquid crystal characteristics in the temperature range of 14.3-71.6°C, indicating that it was very useful as a liquid crystal substance. On the other hand, 2.8 g (yield 8.9%) of the cis isomer was obtained. This substance did not crystallize even when cooled down to -60°C, indicating that it was useless as it was. Trans isomer:
IR (liquid film) ν max: 2923, 2845, 2092, 1608, 1520, 1296, 1213, 1113, 891, 825 and 808 cm⁻¹

### [Example 2]

### Preparation of trans 4-(trans-4-(3,4-difluorophenyl) cyclohexyl)-1-n-pentyl-1-silacyclohexane

2.8 g of cis-4-(trans-4-(3,4-difluorophenyl) cyclohexyl)-1-n-pentyl-1-silacyclohexane obtained in [Preparation example 2] was dissolved in 20 ml of ethanol. 0.2 g of platinum-carbon catalyst was then added to this and stirring was conducted at room temperature for 15 minutes. After filtering out the catalyst, the filtrate was concentrated to obtain 4-(trans-4-(3,4-difluorophenyl) cyclohexyl) -1-ethoxy-1-n-pentyl-silacyclohexane. This was dissolved in 10 ml of THF and the solution was added to a 50 ml THF solution of 5.0 g lithium aluminum hydride, followed by 1 hour of refluxing. The reaction mixture was poured into 200 ml of 5% hydrochloric acid and extraction was conducted using ethyl acetate. After conventional washing by brine, drying and concentrating processes, purification was conducted by means of silica gel chromatography to obtain 2.6 g (yield 93%) of the target product.

### [Preparation example 3]

### Preparation of 4-(p-fluorophenyl)-1-n-heptyl -1-silacyclohexane

17.5 g of p-fluorobromobenzene was dripped into a mixture of 2.55 g of magnesium and 50 ml of THF and 3 hours of refluxing was conducted to obtain a Grignard's reagent. A 50 ml THF solution of 28.0 g of 4-n-heptyl-4-phenyl-4-silacyclohexanone was then added to this. After 2 hours of refluxing, the reaction mixture was cooled down to room temperature and poured into an ammonium chloride solution, followed by extraction using benzene. 1 g of p-toluenesulfonic acid was added to this benzene solution and, while refluxing was conducted, water generated was separated and removed. When distillation of water stopped, the temperature was lowered to room temperature. The reaction mixture was then poured into a sodium bicarbonate solution. After conventional washing by brine, drying and concentrating processes, the residue was purified by means of silica gel chromatography to obtain 33.0 g of 4-(p-fluorophenyl)-1-n-heptyl -1- phenyl-1-sila-3-cyclohexene. This was dissolved in 200 ml of ethyl acetate and hydrogenation was conducted at 0.5 MPa with 200 mg of palladium-carbon as a catalyst. After the theoretical amount of hydrogen was consumed, the catalyst was filtered out and the filtrate was concentrated to obtain 33.2 g of 4-(p -fluorophenyl)-1-n-heptyl-1-phenyl-1-silacyclohexane. 100 ml of a dichloromethane solution of 1.0 mol/liter iodine monochloride was added to this at room temperature and stirring was conducted for 1 hour. A mixture of 7.0 g of isopropyl alcohol and 11.0 g of triethylamine was added to this solution at room temperature and refluxing and stirring were conducted for 1 hour. The reaction mixture was concentrated, and 200 ml of hexane was added to it to precipitate the side product, triethylamine chloride, which was then filtered out. The filtrate was concentrated to obtain 28.2 g of 4-(p-fluorophenyl)-1-n-heptyl-1-isopropoxy -1-silacyclohexane. This was dissolved into 100 ml of THF and this solution was then added to a 100 ml THF solution of 10.0 g lithium aluminum hydride. After 2 hours of refluxing and stirring, the reaction mixture was poured into 200 ml of 5% hydrochloric acid and extraction was conducted using ethyl acetate. After conventional washing by brine, drying and concentrating processes, purification was conducted by means of silica gel chromatography to obtain 19.0 g (yield 72.6%) of the target product.
IR (liquid film) ν max: 2920, 2100, 1510, 1458, 1408, 1228, 985, 887 and 820 cm⁻¹
¹³C-NMR (67.5 MHz, CDCl₃): 10.56 (s), 12.13 (s), 14.11 (s), 22.74 (s), 24.44 (s), 29.08 (s), 31.85 (s), 33.19 (s), 33.45 (s), 46.92 (s), 114.90 (d), 127.89 (d), 144.31 (d) and 161.09 (d) ppm

### [Example 3]

### Preparation of trans-4-(p-fluorophenyl)-1-n-heptyl-1-silacyclohexane

3.7 g of cis-4-(p-fluorophenyl)-1-n-heptyl -1-silacyclohexane obtained in [Preparation example 3] was dissolved in 40 ml of methanol. 0.1 g of RhCl [P(C₆H₅)₃]₃ was then added to this and stirring was conducted at room temperature. After the completion of the reaction, a concentration process was carried out to obtain 4-(p-fluorophenyl)-1-n-heptyl-1-methoxy -1-silacyclohexane. This was dissolved in 10 ml of THF and the solution was added to a 50 ml THF solution of 7.0 g lithium aluminum hydride, followed by 1 hour of refluxing. The reaction mixture was poured into 200 ml of 5% hydrochloric acid and extraction was conducted using ethyl acetate. After conventional washing by brine, drying and concentrating processes, purification was conducted by means of silica gel chromatography to obtain 3.3 g (yield 92%) of the target product.

The following compound was prepared by stereo isomerization from the cis isomer to the trans isomer in the same manner as Example 1.

### [Example 4]

Preparation of trans-4-(2-(trans-4-(3,4-difluorophenyl) cyclohexyl) ethyl)-1-n-propyl-1-silacyclohexane
Yield: 93%
Liquid crystal temperature range: C 11.2 N 63.5 I
IR (liquid film) ν max: 2922, 2850, 2100, 1909, 1518, 1288, 887 and 815 cm⁻¹

### [Example 5]

Preparation of 4'-(trans-4-n-propyl-4-silacyclohexyl) -4-fluorobiphenyl
Yield: 94%
Liquid crystal temperature range: C 80.2 N 119.3 I
IR (KBr disc) ν max: 2918, 2854, 2087, 1604, 1497, 1238, 987, 889 and 816 cm⁻¹

### [Example 6]

Preparation of trans-4-(2-(p-ethoxyphenyl) ethyl)-1-n-pentyl-1-silacyclohexane
Yield: 91%
Liquid crystal temperature range: C 0.2 (N) -1.7 I
IR (liquid film) ν max: 2918, 2852, 2098, 1612, 1512, 1244, 1051, 887 and 822 cm⁻¹

### [Example 7]

Preparation of trans, trans-2-fluoro-4-(4-n-pentyl-4-silacyclohexyl)-4'-(4-n-propylcyclohexyl) biphenyl
Yield: 97%
Liquid crystal temperature range: C 79.0 S 95.0 N 247.0 I
IR (KBr disc) ν max: 2920, 2848, 2098, 1493, 1404, 1194, 987, 887 and 812 cm⁻¹

### [Example 8]

Preparation of trans, trans-4-(4-methoxycyclohexyl) -1-n-propyl-1-silacyclohexane
Yield: 95%
Liquid crystal temperature range: C < -60 N -40.0 I
IR (liquid film) ν max: 2928, 2856, 2820, 2098, 1452, 1103, 989, 887, 843 and 820 cm⁻¹

### [Example 9]

Preparation of 4-(2-(trans-4-n-pentyl-4-silacyclohexyl) ethyl)-3',4'-difluorobiphenyl
Yield: 90%
Liquid crystal temperature range: C 38.6 N 58.2 I
IR (liquid film) ν max: 2920, 2850, 2100, 1605, 1504, 1311, 1267 and 814 cm⁻¹

### [Example 10]

Preparation of trans, trans-4-(4-(4-n-propyl -4-silacyclohexyl)-cyclohexyl)-3',4'-difluorobiphenyl
Yield: 92%
Liquid crystal temperature range: C 82.7 S 107.5 N 229.1 I
IR (KBr disc) ν max: 2916, 2848, 2104, 1533, 1506, 1279, 985, 889, 845 and 814 cm⁻¹

### [Example 11]

Preparation of 4-(trans-4-n-pentyl-4-silacyclohexyl) -2',4''-difluoroterphenyl
Yield: 98%
Liquid crystal temperature range: C 87.8 S 135.0 N 250.3 I
IR (KBr disc) ν max: 2918, 2846, 2106, 1487, 1223, 887 and 816 cm⁻¹

### [Example 12]

Preparation of trans-4-(4-n-pentyl-4-silacyclohexyl) -2-fluoro-4'-(2-(3,4-difluorophenyl) ethyl) biphenyl
Yield: 96%
Liquid crystal temperature range: C 49.5 (SA) 50.6 N 150.5 I
IR (KBr disc) ν max: 2920, 2102, 1518, 1491, 1404, 1290, 1286, 1120, 889 and 818 cm⁻¹

### [Example 13]

Preparation of trans, trans-4-(2-(4-(4-n-propyl -4-silacyclohexyl) cyclohexyl) ethyl)-4'-chloro-3' -fluorobiphenyl
Yield: 90%
Liquid crystal temperature range: C 63.3 N 208.0 I
IR (KBr disc) ν max: 2920, 2850, 2096, 1560, 1481, 1200, 1070, 982, 889, 845 and 805 cm⁻¹

### [Example 14]

Preparation of 4-(trans-4-(trans-4-n-pentyl -4-silacyclohexyl) cyclohexyl)-1-trifluoromethoxybenzene
Yield: 98%
Liquid crystal temperature range: C 37.7 N 80.1 I
IR (KBr disc) ν max: 2924, 2854, 2102, 1510, 1267, 1223, 1194, 1159, 987 and 818 cm⁻¹

As described thus far, the present invention allows conversion to the useful trans isomer from the cis isomer, which is an inevitable side product during the process of manufacturing the trans isomer of liquid crystal silacyclohexane compounds which have a silicon atom(s) in the molecule, and is useless as it is because of the lack of liquid crystal characteristics. The silacyclohexane liquid crystal compound thus obtained is very useful as a material for liquid crystal display elements and such.

## Claims

1. A method of manufacturing a trans silacyclohexane compound, comprising: reacting a compound represented by the general formula: 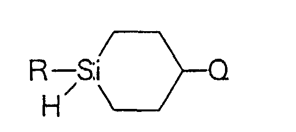 with an alcohol represented by the general formula
R'OH
in the presence of a transition metal catalyst to convert it to an alkoxy silacyclohexane represented by the general formula 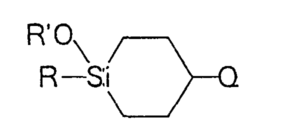 and then reducing the product to obtain a silacyclohexane compound represented by the general formula 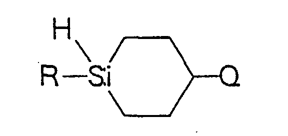 which has a reversed configuration with regard to the silacyclohexane ring compared with the starting substance;
wherein R denotes a linear-chain alkyl group having 1-10 carbons, a branched-chain alkyl group having 3-8 carbons, an alkoxyalkyl group having 2-7 carbons, or an alkenyl group having 2-8 carbons, and Q denotes a group represented by the general formula: 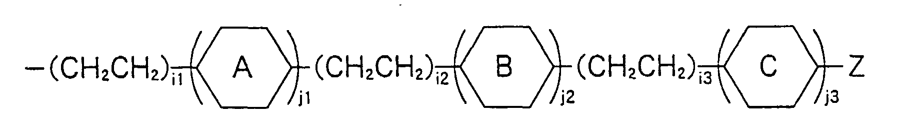 the groups 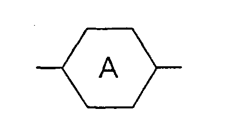 and 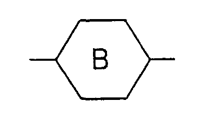 independently denote 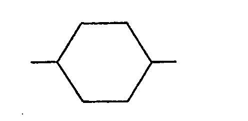 or 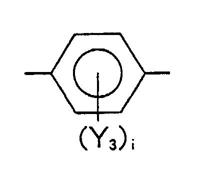
Y₃ denotes F or a methyl group and i denotes 0, 1 or 2 ;
the group 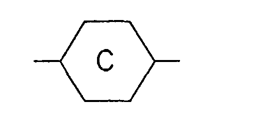 denotes 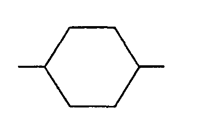 or 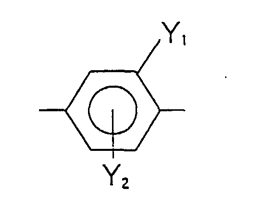
Y₁ and Y₂ independently denote H, F or Cl;
Z denotes a CN, F, Cl, CF₃, CF₂Cl, OCF₃, OCHF₂, OCF₂Cl, OCHFCl, (O)_{ℓ}CY₄=CX₃X₄ ℓ denotes 0 or 1; Y₄, X₃ and X₄ independently denote H, F or Cl., O(CH₂)ᵣ (CF₂)ₛX₅ r and s independently denote 0, 1 or 2 where r+s=2 , 3 or 4; X₅ denotes H, F or Cl., R or OR group;
each of i1, i2 and i3 denotes 0 or 1 where i1 + i2 + i3 = 1 ;
each of j1, j2 and j3 denotes 0, 1 or 2 where j1 + j2 + j3 = 0, 1 or 2; and
R' denotes a linear-chain alkyl group having 1-10 carbons or a branched-chain alkyl group having 3-8 carbons.

## Patentansprüche

1. Verfahren zur Herstellung einer trans-Silacyclohexanverbindung, umfassend das Umsetzen einer Verbindung der allgemeinen Formel: 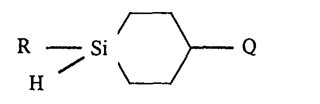 mit einem Alkohol der allgemeinen Formel
R'OH
in Gegenwart eines Übergangsmetallkatalysators, um diese in ein Alkoxysilacyclohexan der allgemeinen Formel 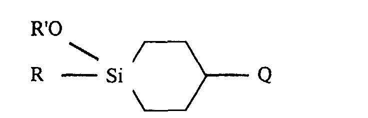 umzuwandeln, und danach Reduzieren des Produkts, um eine Silacyclohexanverbindung der allgemeinen Formel 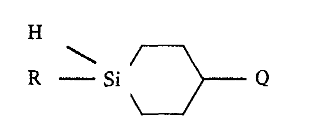 zu erhalten, welche bezüglich des Silacyclohexanrings, verglichen mit der Ausgangssubstanz, eine umgekehrte Konfiguration aufweist;
worin R eine linearkettige Alkylgruppe mit 1-10 Kohlenstoffen, eine verzweigtkettige Alkylgruppe mit 3-8 Kohlenstoffen, eine Alkoxyalkylgruppe mit 2-7 Kohlenstoffen oder eine Alkenylgruppe mit 2-8 Kohlenstoffen bedeutet, und Q eine Gruppe der allgemeinen Formel: 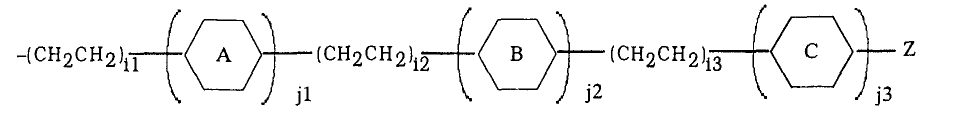 bedeutet,
die Gruppen 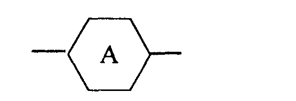 und 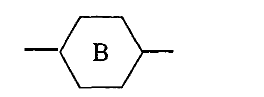 unabhängig 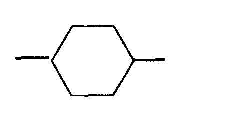 oder 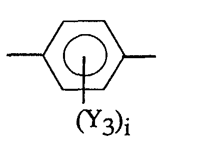 bedeuten,
Y₃ F oder eine Methylgruppe bedeutet und i 0, 1 oder 2 bedeutet; die Gruppe 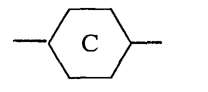 die Bedeutung 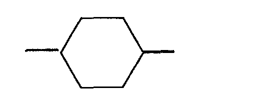 oder 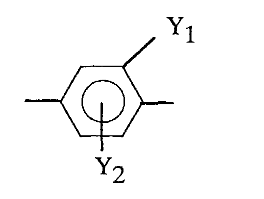 hat,
Y₁ und Y₂ unabhängig voneinander H, F oder Cl bedeuten;
Z CN, F, Cl, CF₃, CF₂Cl, OCF₃, OCHF₂, OCF₂Cl, OCHFCl, (O)_{ℓ}CY₄=CX₃X₄, worin ℓ 0 oder 1 bedeutet; Y₄, X₃ und X₄ unabhängig H, F oder Cl bedeuten, O(CH₂)ᵣ (CF₂)ₛX₅, worin r und s unabhängig 0, 1 oder 2 bedeuten, wobei r+s=2, 3 oder 4; X₅ H, F oder Cl bedeutet; R- oder OR-Gruppe bedeutet;
jedes i1, i2 und i3 0 oder 1 bedeutet, wobei i1+i2+i3=1;
jedes j1, j2 und j3 0, 1 oder 2 bedeutet, wobei j1+j2+j3=0, 1 oder 2; und
R' eine linearkettige Alkylgruppe mit 1-10 Kohlenstoffen oder eine verzweigtkettige Alkylgruppe mit 3-8 Kohlenstoffen bedeutet.

## Revendications

1. Procédé de préparation d'un composé de type trans silacyclohexane, selon lequel on fait réagir un composé correspondant à la formule générale : 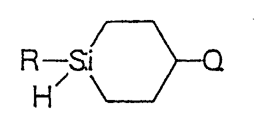 avec un alcool représenté par la formule :
R'OH
en présence d'un catalyseur à base de métal de transition pour le convertir en un alkoxy silacyclohexane représenté par la formule générale : 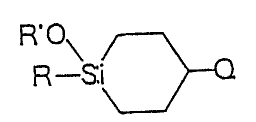 et on réduit ensuite le produit pour obtenir un composé de type silacyclohexane représenté par la formule générale : 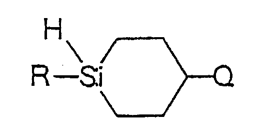 ayant une configuration inversée en ce qui concerne le cycle silacyclohexane, par comparaison à la substance de départ ;
R représentant un groupe alkyle à chaîne linéaire comportant de 1 à 10 atomes de carbone, un groupe alkyle à chaîne ramifiée comportant de 3 à 8 atomes de carbone, un groupe alkoxy alkyle comportant de 2 à 7 atomes de carbone, ou un groupe alcényle comportant de 2 à 8 atomes de carbone, et Q représente un groupe de formule générale : 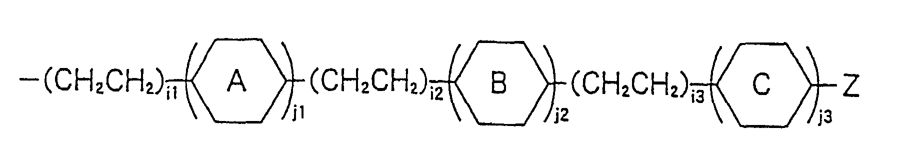 les groupes : 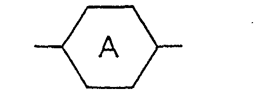 et 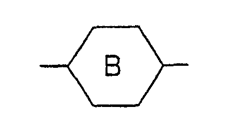 représentent indépendamment : 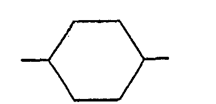 ou 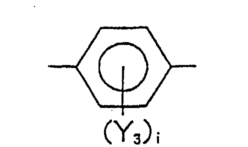
Y₃ représente F ou un groupe méthyle, et i est égal à 0, 1 ou 2 ;
le groupe : 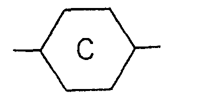 représente : 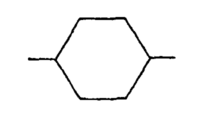 ou 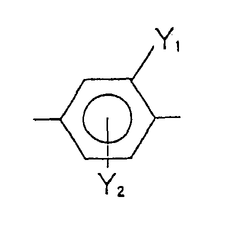
Y₁ et Y₂ représentent indépendamment H, F ou Cl ;
Z représente CN, F, Cl, CF₃, CF₂Cl, OCF₃, OCHF₂, OCF₂Cl, OCHFCl, (O)ₗCY₄=CX₃X₄, l étant égal à 0 ou 1 ; Y₄, X₃ et X₄ représentent indépendamment H, F ou Cl, O(CH₂)ᵣ (CF₂)ₛX₅, r et s étant indépendamment égaux à 0, 1 ou 2 et r+s=2, 3 ou 4 ; X₅ représente H, F ou Cl, R ou OR ;
i1, i2 et i3 étant respectivement égaux à 0 ou 1 avec i1 + i2 + i3 = 1 ;
j1, j2 et j3 étant respectivement égaux à 0, 1 ou 2 avec j1 + j2 + j3 = 0, 1 ou 2 ; et
R' représente un groupe alkyle à chaîne linéaire comportant de 1 à 10 atomes de carbone ou un groupe alkyle à chaîne ramifiée comportant de 3 à 8 atomes de carbone.
